# EUROPEAN PATENT APPLICATION

(11) **EP 4 287 154 A1**
(43) Date of publication of application: **06.12.2023**
(21) Application number: 21932955.4
(22) Date of filing: 24.03.2021
(51) Int. Cl.: G08G 1/00

(54) **DRIVER COLLATION SYSTEM, DRIVER COLLATION METHOD, AND RECORDING MEDIUM**

(71) Applicant: NEC Corporation, 108-8001 Tokyo (JP)
(72) Inventor: TOKUNAGA Masaya, Tokyo 108-8001 (JP); SUGAWARA Chisato, Tokyo 108-8001 (JP); JUMONJI Nana, Tokyo 108-8001 (JP); KIMURA Yosuke, Tokyo 108-8001 (JP); TAKAMI Toru, Tokyo 136-8627 (JP)
(74) Representative: Vossius & Partner Patentanwälte Rechtsanwälte mbB
(86) International application number: PCT/JP2021/012146
(87) International publication number: WO 2022/201345

(57) **Abstract**

The present invention enables appropriate extraction of a candidate for a driver of a vehicle. This driver collation system is provided with a driver characteristics acquisition unit that acquires driving characteristics related to the driving by a driver of a vehicle, and an extraction processing unit that extracts a candidate for a driver from past drivers by collating the acquired driving characteristics with the driving characteristics of the past drivers.

## Description

### Technical Field

The present disclosure relates to a driver collation system that collates a driver of a vehicle.

### Background Art

In the case of renting a vehicle such as car sharing or a rental car, confirming whether a subscriber who has reserved a vehicle is using a rented vehicle leads to prevention of diversion, theft, and criminal use of the vehicle. Alternatively, by checking whether a predetermined driver is using a vehicle managed by a business operator, such as a company's vehicle, it is possible to appropriately use these vehicles.

PTLs 1 and 2 disclose a technique for identifying a driver of a vehicle by face authentication using a face image obtained by photographing the driver in the vehicle. PTL 4 discloses a technique for performing personal authentication by collating a result of biometric authentication with authentication information other than the biometric authentication. PTL 3 discloses a technique for authenticating a driver based on GPS data.

### Citation List

### Patent Literature

PTL 1: JP 2020-149708 A
PTL 2: JP 2020-095694 A
PTL 3: JP 2019-006368 A
PTL 4: JP 2005-202730 A

### Summary of Invention

### Technical Problem

However, face authentication can cause an authentication error. In the techniques disclosed in PTLs 1, 2, and 4, when face authentication or the like fails, in PTL 3, when GPD data cannot be acquired, a driver who is using a vehicle cannot be identified.

An object of the present disclosure is to provide a technique capable of appropriately extracting a candidate for a driver of a vehicle. Solution to Problem

An aspect of a driver collation system of the present disclosure is provided with a driver characteristics acquisition unit that acquires driving characteristics related to the driving by a driver of a vehicle, and an extraction processing unit that extracts a candidate for a driver from past drivers by collating the acquired driving characteristics with the driving characteristics of the past drivers.

An aspect of an information management method of the present disclosure includes: acquiring driving characteristics related to driving of a driver in a vehicle; and extracting a driver candidate from past drivers by collating the acquired driving characteristics with the driving characteristics of the past drivers.

An aspect of a program stored in a recording medium of the present disclosure causes a computer to execute: acquiring driving characteristics related to driving of a driver in a vehicle; and extracting a driver candidate from past drivers by collating the acquired driving characteristics with the driving characteristics of the past drivers.

The program may be stored in a non-transitory recording medium which can be readable and writable by a computer.

### Advantageous Effects of Invention

An example advantage according to the present disclosure is that it is possible to appropriately extract a candidate for a driver of a vehicle.

### Brief Description of Drawings

[Fig. 1] Fig. 1 is a diagram illustrating an outline of a management system according to a first example embodiment.
[Fig. 2] Fig. 2 is a block diagram illustrating an example of a configuration of a vehicle system according to the first example embodiment.
[Fig. 3] Fig. 3 is a diagram illustrating an example of driver characteristics including face information and driving characteristics.
[Fig. 4] Fig. 4 is a diagram illustrating an example of information stored in a driver characteristic DB.
[Fig. 5] Fig. 5 is a diagram illustrating an example of driver characteristics stored in the driver characteristic DB.
[Fig. 6] Fig. 6 is a block diagram illustrating a configuration of a driver collation system according to the first example embodiment.
[Fig. 7] Fig. 7 is an example of information stored in a collation DB.
[Fig. 8] Fig. 8 is a flowchart illustrating an example of an operation of the vehicle system according to the first example embodiment.
[Fig. 9] Fig. 9 is a flowchart illustrating an example of an operation of the driver collation system according to the first example embodiment.
[Fig. 10] Fig. 10 is a diagram illustrating a notification example which is a comparison result between a driver of the vehicle and a subscriber of the vehicle.
[Fig. 11] Fig. 11 is a diagram illustrating an example of a display screen of a driver candidate.
[Fig. 12] Fig. 12 is a flowchart illustrating a modification of the operation of the driver collation system according to the first example embodiment.
[Fig. 13] Fig. 13 is a diagram illustrating a notification example which is a comparison result between a driver of the vehicle, a driver candidate, and a subscriber of the vehicle.
[Fig. 14] Fig. 14 is a diagram illustrating an outline of an example of a management system according to a second example embodiment.
[Fig. 15] Fig. 15 is a block diagram illustrating an example of a configuration of a vehicle system according to the second example embodiment.
[Fig. 16] Fig. 16 is a flowchart illustrating an example of an operation of the vehicle system according to the second example embodiment.
[Fig. 17] Fig. 17 is a block diagram illustrating an example of a configuration of a driver characteristic system according to the second example embodiment.
[Fig. 18] Fig. 18 is a flowchart illustrating an example of an operation of the driver characteristic system according to the second example embodiment.
[Fig. 19] Fig. 19 is a block diagram illustrating a configuration of a driver collation system according to a third example embodiment.
[Fig. 20] Fig. 20 is a flowchart illustrating an example of an operation of the driver collation system according to the third example embodiment.
[Fig. 21] Fig. 21 is a diagram illustrating an example of a hardware configuration of a computer.

### Example Embodiment

A driver collation system according to an example embodiment of the present disclosure will be described using an example applied to vehicle reservation management. Specifically, the driver collation system collates whether the driver of the vehicle is a subscriber of the vehicle using the face information of the driver in the vehicle and the driving characteristics of the vehicle by the driver. The following description of the example embodiments is illustrative and not restrictive.

### [First example embodiment]

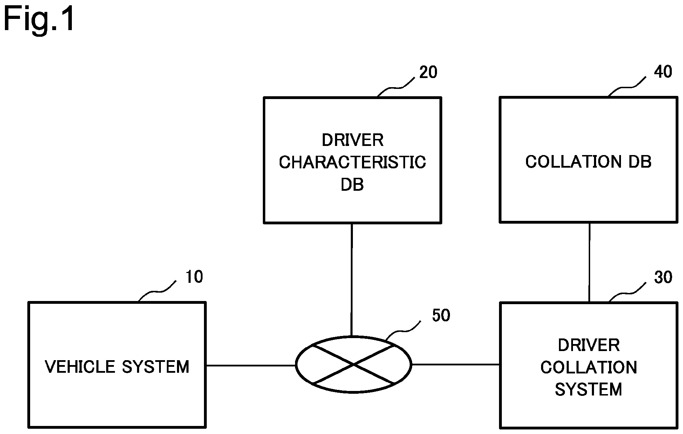

A management system according to a first example embodiment will be described with reference to the drawings. Fig. 1 is a diagram illustrating an outline of a management system according to the first example embodiment. The management system illustrated in Fig. 1 includes a vehicle system 10, a driver characteristic DB 20, a driver collation system 30, and a collation DB 40.

The driver collation system 30 is communicably connected to the vehicle system 10, the driver characteristic DB 20, and the collation DB 40 via a network 50. Hereinafter, the vehicle system 10, the driver characteristic DB 20, the driver collation system 30, and the collation DB 40 are provided.

### (Vehicle system 10)

The vehicle system 10 is provided in a vehicle such as an automobile, and generates face information and driving characteristics of a driver based on sensor data of various sensors installed in the vehicle. The generated face information and driving characteristics are used in the driver collation system 30 to check whether the driver of the vehicle is a subscriber of the vehicle. The vehicle may include a motorcycle (including three wheels), a bicycle, and the like in addition to an automobile (four-wheeled automobile).

The face information is, for example, a face image or a face characteristic of the driver in the vehicle. The driving characteristics are characteristics related to driving of the driver. The face image is an image including a part or all of the face. The face characteristic is arbitrary data indicating a feature of the face. The driving characteristics may be a characteristic before driving (before traveling) in the vehicle, a characteristic during driving (during traveling) in the vehicle, or a characteristic after driving (after traveling) in the vehicle.

The driving characteristics include, for example, a human characteristic indicating a characteristic of the driver at the driver's seat of the vehicle, a setting characteristic indicating a characteristic of vehicle setting by the driver, or a traveling characteristic indicating a characteristic of vehicle traveling by the driver. The human characteristic may be a habit or a nature of a behavior of the driver in the vehicle. For example, it is the position of the driver's hand holding the steering wheel. The driving characteristics are not limited to a human characteristic, a setting characteristic, or a traveling characteristic as long as it can identify the driver in the vehicle.

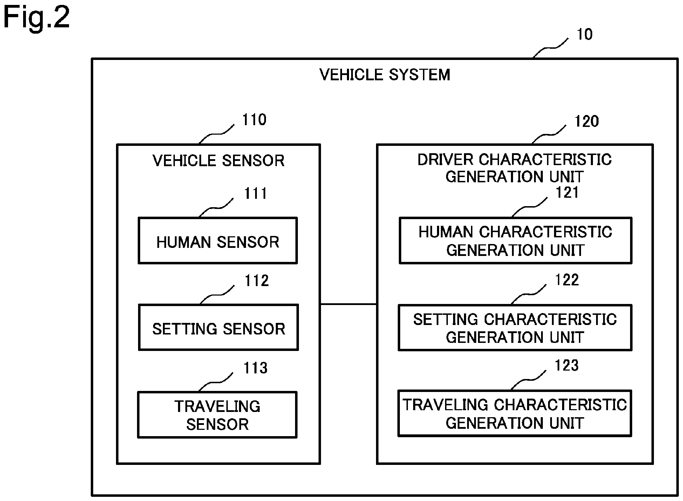

A configuration of the vehicle system will be described with reference to the drawings. Fig. 2 is a block diagram illustrating an example of a configuration of the vehicle system 10. The vehicle system 10 illustrated in Fig. 2 includes a vehicle sensor 110, a driver characteristic generation unit 120, and a communication unit (not illustrated).

The vehicle sensor 110 generates sensor data regarding driving of the driver in the vehicle. The vehicle sensor 110 is, for example, a human sensor 111, a setting sensor 112, or a traveling sensor 113. The vehicle sensor 110 is not limited to the above three types of sensors. The human sensor 111 is a sensor related to a driver in the vehicle. The human sensor is, for example, a camera that captures the appearance of the driver, a microphone that collects the voice of the driver, a pressure sensor that measures the weight of the driver, a weight sensor, or the like. The human sensor is not limited to a camera, a microphone, or the like.

The setting sensor 112 is a sensor that detects various settings in the vehicle. The setting sensor detects, for example, a position setting of a rearview mirror, a door mirror, a position setting of a seat, a temperature setting of an air conditioner, a position setting of opening and closing a window, and a volume setting of a car audio. However, the target detected by the setting sensor is not limited thereto.

Examples of the traveling sensor 113 include, but are not limited to, an acceleration sensor, a steering angle sensor that measures a steering angle of steering, a torque sensor that detects steering force, and an accelerator position sensor that detects an opening degree of an accelerator. The vehicle sensor 110 sends sensor data from each sensor to the driver characteristic generation unit 120.

The driver characteristic generation unit 120 generates driver's face information and a feature (hereinafter, driving characteristics will be referred to) regarding driving of the driver in the vehicle based on the sensor data of the vehicle sensor 110. The face information and the driving characteristics are also called driver characteristics.

Next, the driver characteristic generation unit 120 includes a human characteristic generation unit 121, a setting characteristic generation unit 122, and a traveling characteristic generation unit 123. The human characteristic generation unit 121 generates the face information of the driver in the vehicle and the human characteristic of the driver in the vehicle based on the sensor data of the human sensor 111.

For example, in the case of the face information, the human characteristic generation unit 121 generates a face image by performing image processing on captured image data obtained by photographing the driver in the vehicle. The human characteristic generation unit 121 may extract the feature amount of the face from the generated face image to generate the face characteristic.

For example, in the case of the human characteristic, the human characteristic generation unit 121 acquires the position of the face of the driver or the driving posture in the captured image captured by the fixed point camera installed in the vehicle. The human characteristic may be a voice characteristic of the driver in the vehicle obtained from the sensor, a weight, or the like. The voice characteristic is, for example, an audio frequency, a sound pressure, or the like.

The setting characteristic generation unit 122 generates a setting characteristic of the vehicle based on the sensor data of the setting sensor 112. The setting characteristic is a characteristic related to setting of the vehicle by the driver. For example, the setting characteristic generation unit 122 generates information on the position of the rearview mirror or the door mirror or the position of the seat set by the driver. The position information is generated, for example, as a movement amount from an arbitrary reference position. The setting characteristic is not limited thereto.

The traveling characteristic generation unit 123 generates a traveling characteristic based on sensor data of the vehicle sensor 110. The traveling characteristic is a characteristic related to vehicle traveling by the driver. The traveling characteristic generation unit 123 generates, for example, a traveling characteristic related to the speed of the accelerator pedal based on sensor data of an accelerator position sensor. The traveling characteristic is not limited thereto. For example, the traveling characteristic generation unit 123 may generate an operation characteristic such as a bending manner based on sensor data of a steering sensor as a traveling characteristic. The traveling characteristic generation unit 123 may generate a traveling route based on the acceleration sensor, the map information, and the position information, and a traveling time zone by a clock as the traveling characteristic. As the traveling route, a traveling route set in a navigation system may be used.

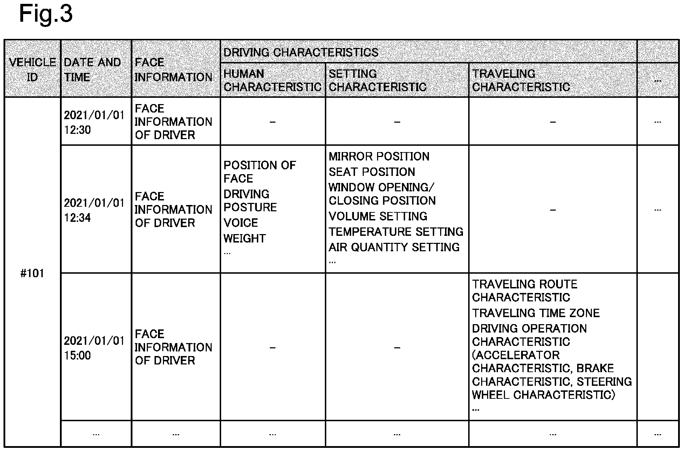

Fig. 3 is a diagram illustrating an example of driver characteristics including face information and driving characteristics. In the drawing, the vehicle ID is an identifier of the vehicle. The face information or the driving characteristics generated by the driver characteristic generation unit 120 is associated with the vehicle ID and the date and time, and is stored in a storage unit (not illustrated). The date and time indicate, for example, a date and time in which the vehicle ID is associated with the face characteristic and the driving characteristics.

The driver characteristic generation unit 120 transmits the driver characteristic in which the face information or the driving characteristics is associated with the vehicle ID to the driver characteristic DB 20 via a communication unit (not illustrated). For example, at least one of the human characteristic, the setting characteristic, and the traveling characteristic among the driving characteristics may be associated with the vehicle ID and the face information. Alternatively, there may be an example in which the driving characteristics are not included. An example of the association between the face information and the driving characteristics is not limited thereto.

### (Driver characteristic DB 20)

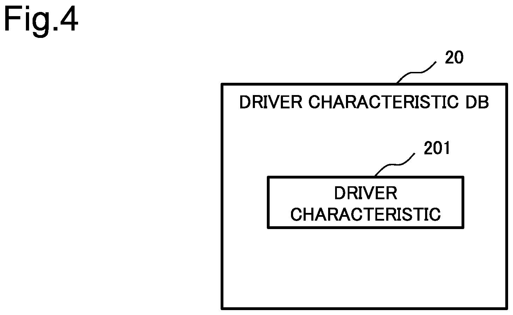

Fig. 4 is a diagram illustrating an example of information stored in the driver characteristic DB 20. The driver characteristic DB 20 stores driver characteristics 201 transmitted from the vehicle system 10 of each vehicle. The driver characteristic DB 20 stores the driver characteristics 201 including face information and driving characteristics transmitted by each vehicle in the past. The driver characteristic DB 20 is, for example, a storage device with a communication function. The driver characteristic DB 20 may be configured by a computer. The driver characteristic DB 20 may be integrated with the collation DB 40.

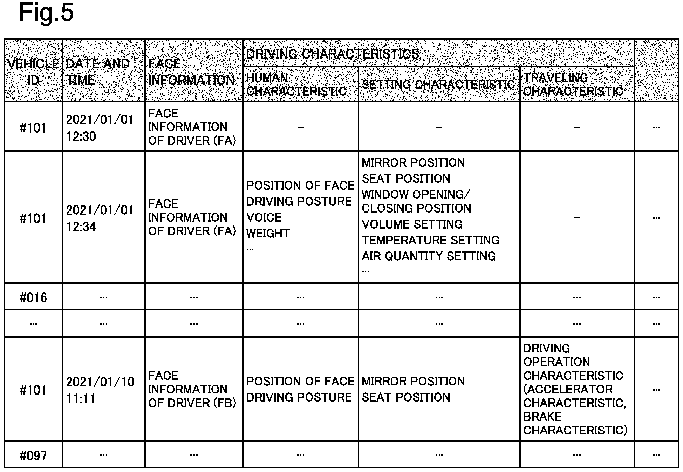

Fig. 5 is a diagram illustrating an example of driver characteristics stored in the driver characteristic DB. In the driver characteristics 201 illustrated in Fig. 5, a vehicle ID, a date and time, face information of a driver who drives the vehicle, and driving characteristics of the driver are associated with each other. The driver characteristic DB may include information that can identify an individual. For example, driver license, personal number card, and IC card information transmitted in association with the face information and the driving characteristics may be included. The items of the driver characteristics 201 illustrated in Fig. 5 are examples, and the driver characteristics are not limited thereto.

### (Driver collation system 30)

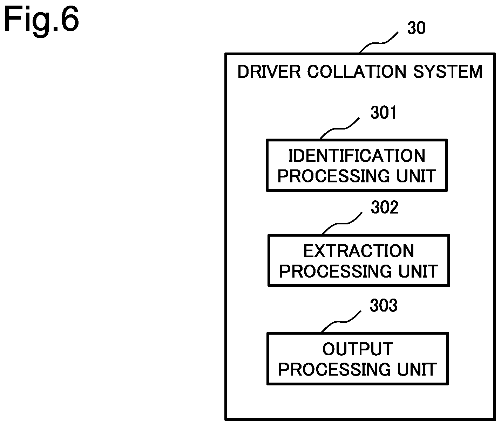

Hereinafter, the driver collation system 30 will be described with reference to the drawings. Fig. 6 is a block diagram illustrating an example of a configuration of the driver collation system 30 according to the first example embodiment. The driver collation system 30 illustrated in Fig. 6 includes an identification processing unit 301, an extraction processing unit 302, an output processing unit 303, and a communication unit (not illustrated). The driver collation system 30 is, for example, a computer that executes various functions by software. The driver collation system 30 may be achieved by cloud computing.

### (Identification processing unit 301)

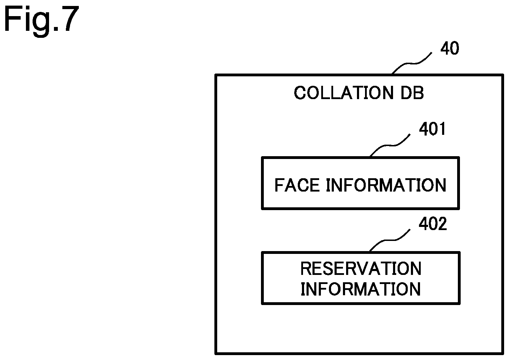

The identification processing unit 301 collates the face information of the driver in the vehicle transmitted from the vehicle system 10 with the face information stored in the collation DB 40. Fig. 7 is an example of information stored in the collation DB 40. The collation DB 40 stores face information 401 and reservation information 402. The face information 401 is face information of the driver registered in advance. The face information is a face image or a face characteristic. The reservation information 402 is information about a subscriber who is scheduled to drive the vehicle. In the case of a rental car or the like, the subscriber is a user of the vehicle registered at the time of reservation. In the case of a vehicle managed by a company, such as a company car, the subscriber is a driver determined in advance by the company. In this case, the reservation information may be created based on, for example, schedule information set by the company (there is no need to explicitly perform reservation operation). The reservation information 402 includes, for example, a subscriber name, a vehicle ID of a reserved vehicle, a vehicle renting date and time, and the like. The reservation information 402 may include information on a person who is likely to ride in the vehicle with the subscriber and drive instead of the subscriber as a target for collation with the driver. The person who may drive is, for example, a family member of the subscriber, a friend, a colleague, or the like.

The identification processing unit 301 transmits the collation result of the face information to the vehicle system 10 via the communication unit (not illustrated). Alternatively, it is sent to the output processing unit 303. The collation result transmitted to the vehicle system 10 may be, for example, a personal ID associated with the driver's face information when the face authentication is successful. Alternatively, when the face authentication fails, the collation result to be transmitted may be "face authentication failure". "Failure" indicates that the driver has not been identified by the face authentication.

The driver collation system 30 may receive the face information of the driver of the vehicle via the driver characteristic DB 20 in addition to the vehicle system 10.

### (Extraction processing unit 302)

The driver collation system 30 receives driving characteristics related to driving of the driver in the vehicle from the vehicle system 10. The extraction processing unit 302 acquires the driving characteristics of the driver, and collates the acquired driving characteristics of the driver with the past driving characteristics included in the driver characteristics 201 of the driver characteristic DB 20. The past driving characteristics include at least one of a human characteristic, a setting characteristic, and a traveling characteristic. The extraction processing unit 302 extracts a driver candidate that is a driver identical to or similar to the acquired driving characteristics from among the driving characteristics of the driver in the past.

The extracted information regarding the driver candidate is, for example, driver's face information associated with the driving characteristics. Alternatively, when a personal ID that can identify an individual is associated with the past driving characteristics of the driver characteristic DB 20, the personal ID may be extracted as the driver candidate information. The personal ID is, for example, a driver's license number, a personal number, a membership number, or the like. The extraction processing unit 302 transmits information regarding the extracted driver candidate to the output processing unit 303 as an extraction result. When the extraction processing unit 302 fails to extract a driver candidate, the extraction result is "no driver candidate".

In addition to the vehicle system 10, the driver collation system 30 may receive the driving characteristics of the driver of the vehicle via the driver characteristic DB 20.

### (Output processing unit 303)

When the face authentication of the driver fails in the identification processing unit 301, the output processing unit 303 notifies an alert of the face authentication failure. The output processing unit 303 notifies the administrator of the vehicle (rental car agency, person in charge of operation of company car, etc.), for example. The notification destination is not limited to these, and the notification may be given to the driver or the subscriber of the vehicle. On the other hand, when the face authentication of the driver succeeds in the identification processing unit 301, the output processing unit 303 compares the information of the driver identified by the face authentication with the reservation information stored in the collation DB 40.

Specifically, whether the driver identified by the face authentication is the subscriber included in the reservation information is compared. The subscriber may include a friend, a family member, a colleague, or the like who may drive the vehicle applied by the subscriber when registering the reservation information.

As a result of the comparison, when the driver identified by the face authentication is different from the subscriber included in the reservation information, the output processing unit 303 notifies an alert indicating that the driver is different from the subscriber. In a case where the driver is the same as the subscriber, the output processing unit 303 does not make a notification.

In the above description, an example has been described in which the extraction processing unit 302 extracts the driver candidate based on the driving characteristics after the face authentication fails in the identification processing unit 301, but the present invention is not limited thereto. For example, regardless of the success or failure of the face authentication, the driver candidate may be extracted using the driving characteristics, and the output processing unit 303 may compare the driver identified by the face authentication and the driver candidate based on the driving characteristics with the subscriber of the reservation information.

In the vehicle, the authentication medium may be read to acquire the identification information of the driver. The authentication medium may be a mobile terminal in addition to the IC card. The identification processing unit 301 may identify the driver based on the identification information acquired from the authentication medium instead of the face authentication or in combination with the face authentication.

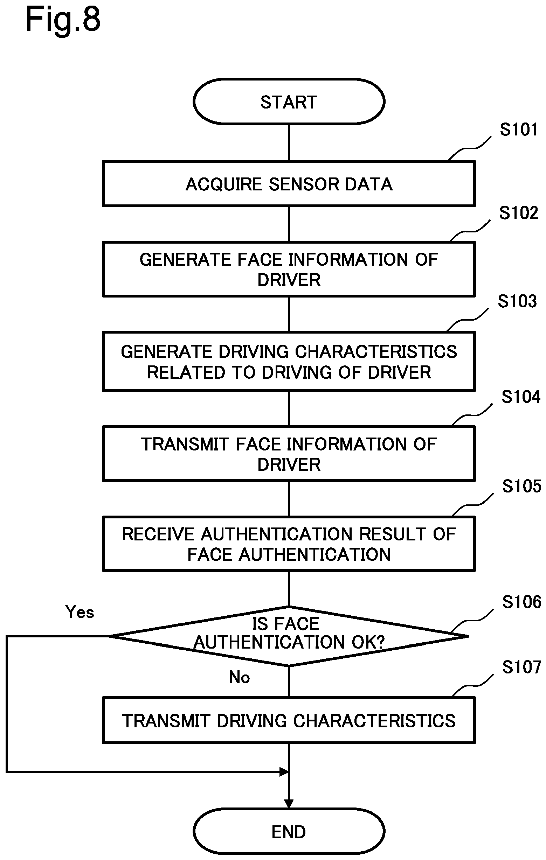

Next, an operation of the vehicle system 10 according to the first example embodiment will be described with reference to the drawings. Fig. 8 is a flowchart illustrating an example of an operation of the vehicle system 10 according to the first example embodiment. Hereinafter, an example in which the vehicle system 10 generates the face information and the driving characteristics of the driver who drives the vehicle and transmits the generated face characteristic and driving characteristics to the driver collation system 30 will be described.

When the driver gets in the vehicle, the vehicle sensor 110 starts to collect sensor data. For example, when it is detected that the driver sits on a seat, the vehicle sensor 110 may start collecting sensor data. The vehicle sensor 110 includes a human sensor 111, a setting sensor 112, and a traveling sensor 113. The vehicle sensor 110 acquires various sensor data (step S101) and transmits the acquired sensor data to the driver characteristic generation unit 120. The various sensor data may be acquired before or during traveling of the vehicle. For example, a camera installed in the vehicle captures an image of the driver, and sends the captured image data to the driver characteristic generation unit 120.

The driver characteristic generation unit 120 generates face information and driving characteristics based on the sensor data. For example, the human characteristic generation unit 121 of the driver characteristic generation unit 120 generates the face information of the driver based on the sensor data of the human sensor 111 (step S102). Specifically, the human characteristic generation unit 121 generates the face image of the driver based on the captured image data of the camera.

The driver characteristic generation unit 120 generates driving characteristics regarding driving of the driver based on the sensor data of the vehicle sensor 110 (step S103). For example, the human characteristic generation unit 121 of the driver characteristic generation unit 120 generates a human characteristic. The human characteristic is, for example, a driving posture of the driver. The setting characteristic generation unit 122 generates a setting characteristic, and the traveling characteristic generation unit 123 generates a traveling characteristic. The setting characteristic is, for example, a mirror position of the vehicle set by the driver. The traveling characteristic is a driving operation characteristic of the driver, and is, for example, a way of stepping on an accelerator pedal of the driver.

Next, the vehicle system 10 transmits the face information of the driver to the driver collation system 30 for face authentication using the face information of the driver (step S104). Specifically, the driver characteristic generation unit 120 associates the driver's face information with the vehicle ID, and transmits the face information and the vehicle ID to a communication unit (not illustrated). The communication unit transmits the face information of the driver associated with the vehicle ID to the driver collation system 30.

Next, the vehicle system 10 receives the authentication result of the driver's face authentication from the driver collation system 30 (step S105). When the authentication result is face authentication OK (Yes in step S106), the vehicle system 10 ends the process of acquiring the sensor data by the vehicle sensor 110.

On the other hand, when the authentication result is not face authentication OK (face authentication NG) (Yes in step S106), the vehicle system 10 transmits the driving characteristics of the driver to the driver collation system 30 to identify the driver using the driving characteristics (step S107). Specifically, the driver characteristic generation unit 120 associates at least one driving characteristics of a human characteristic, a setting characteristic, and a traveling characteristic of the driver with the vehicle ID "#101", and sends the vehicle ID to a communication unit (not illustrated). The communication unit transmits the driving characteristics of the driver associated with the vehicle ID to the driver collation system 30.

### <Operation of driver collation system>

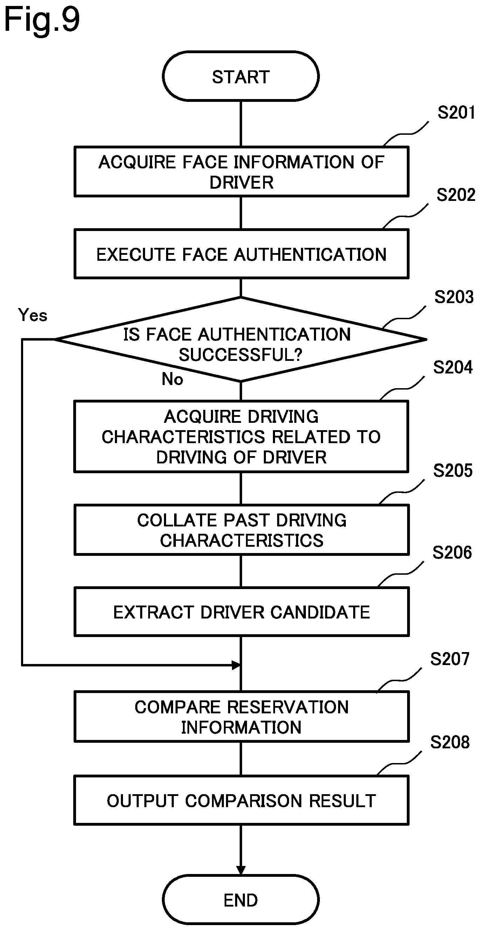

An operation of the driver collation system 30 according to the first example embodiment will be described with reference to the drawings. Fig. 9 is a flowchart illustrating an example of the operation of the driver collation system 30 according to the first example embodiment. The following operation of the driver collation system 30 is an example of using the driving characteristics of the driver after the face authentication of the driver in the vehicle fails.

The driver collation system 30 receives the driver's face information transmitted by the vehicle system 10. The identification processing unit 301 of the driver collation system 30 acquires the face information of the driver of the vehicle (step S201). The identification processing unit 301 collates the acquired face information of the driver with the previously registered face information 401 stored in the collation DB 40 (step S202), and identifies the driver of the vehicle.

When the face authentication of the driver succeeds (Yes in step S203), the identification processing unit 301 collates the information of the driver identified by the face authentication with the reservation information stored in the collation DB 40 (step S207).

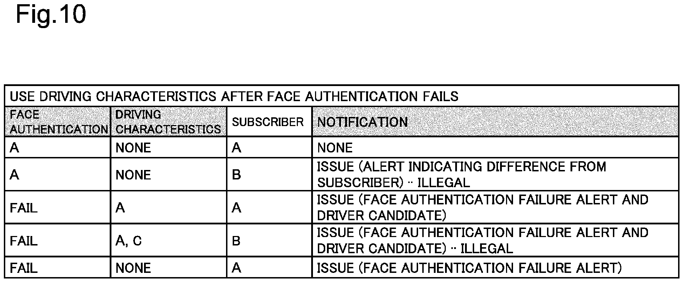

Fig. 10 is a diagram illustrating a notification example which is a comparison result between the driver of the vehicle and the subscriber of the vehicle. The items of the face authentication illustrated in Fig. 10 indicate the driver identified by the face authentication. In the drawing, the driver identified by the face authentication is "A". The "failure" in the face authentication item indicates that the driver has not been identified by the face authentication.

The item of the driving characteristics indicates a driver candidate extracted by collating the driving characteristics of the driver. When there is no driver candidate, "None" is displayed. In the drawing, the driver candidate extracted by the collation of the driving characteristics is "A" or "A" and "C". The item of the subscriber indicates a subscriber who has reserved the vehicle included in the reservation information. In the drawing, the subscriber is "A" or "B".

As illustrated in Fig. 10, when the driver is "A" and the subscriber of the vehicle is "A" as a result of the face authentication, the driver and the subscriber coincide with each other, and thus the output processing unit 303 does not output a notification. On the other hand, when the subscriber of the vehicle is "B", since the driver and the subscriber do not match, the output processing unit 303 notifies an illegality alert indicating "different from the subscriber".

Returning to Fig. 9, when the face authentication of the driver fails (No in step S203), the extraction processing unit 302 acquires driving characteristics regarding driving of the driver (step S204).

The extraction processing unit 302 collates the acquired driving characteristics of the driver with the past driving characteristics in the collation DB 40 (step S205), and extracts a driver candidate that is a candidate for the driver of the vehicle (step S206). The extraction processing unit 302 transmits the extraction result to the output processing unit 303.

As illustrated in Fig. 10, when the driver candidate based on the collation result of the driving characteristics is "A" and the subscriber is "A", the output processing unit 303 notifies a face authentication failure alert and notifies "A" of the driver candidate. On the other hand, when the driver candidates based on the collation result of the driving characteristics are "A" and "C" and the subscriber is "B", the output processing unit 303 notifies the face authentication failure alert and "A" and "C" of the driver candidates, and outputs an "invalid" notification because the driver of the vehicle and the subscriber do not match. When there is no driver candidate, the output processing unit 303 notifies a face authentication failure alert.

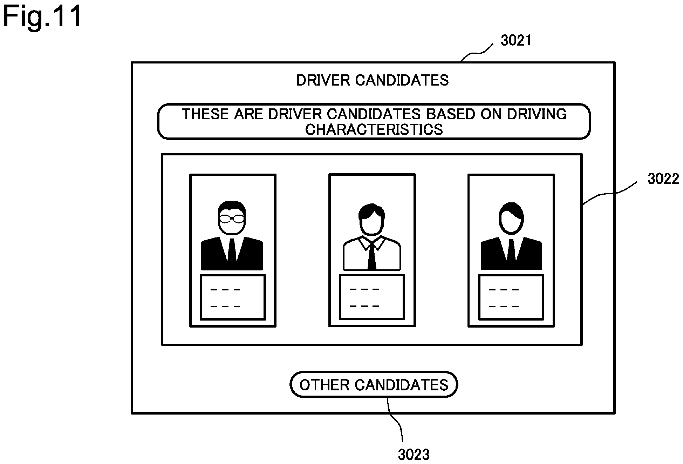

Fig. 11 is a diagram illustrating an example of a display screen of a driver candidate. The display screen is output by the output processing unit 303. A display 3021 displays driver candidates based on the driving characteristics. In the drawing, three driver candidates are displayed on a display 3022. A display button 3023 is a button for displaying a driver candidate different from the display 3022. When there is another driver candidate, the display button 3023 is activated.

In the operation of the driver collation system 30 illustrated in Fig. 9, after the face authentication of the driver of the vehicle fails, a driver candidate is extracted based on the driving characteristics of the driver of the vehicle. The driver collation system 30 can compare the information of the driver candidate with the reservation information even if the face authentication fails, and can confirm whether the driver who drives the vehicle is a subscriber who has reserved the vehicle or is different from the subscriber.

### (Modification of first example embodiment)

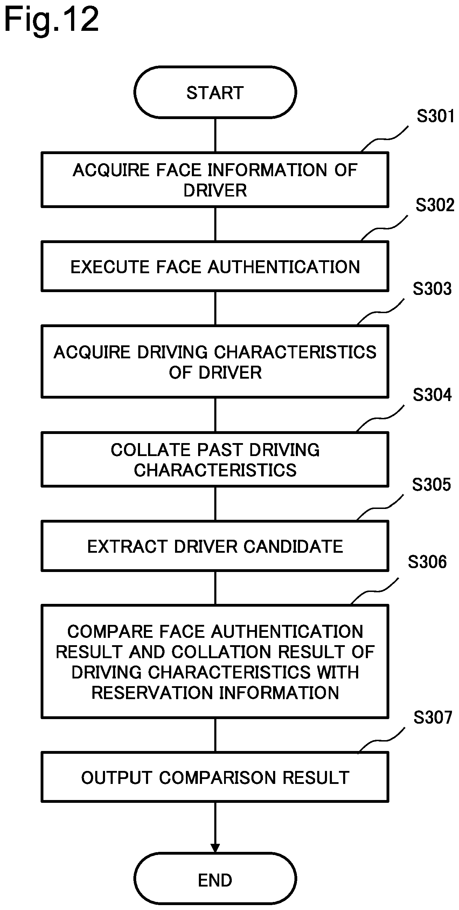

Fig. 12 is a flowchart illustrating a modification of the operation of the driver collation system 30 according to the first example embodiment. The modification of the operation of the driver collation system 30 is different from the operation of the driver collation system 30 illustrated in Fig. 9 that does not use the driving characteristics when the face authentication of the driver succeeds in that the driving characteristics are used regardless of whether the face authentication of the driver succeeds. In the modification of the operation of the driver collation system 30, the face authentication of a driver of a vehicle and extraction of a driver candidate based on driving characteristics are performed. When the face authentication result and the extraction result indicate different drivers, priority is given to the face authentication result.

First, an operation of a vehicle system 10 according to the modification will be described. In the vehicle system 10, when the driver gets in the vehicle, the vehicle sensor 110 starts to collect sensor data and acquires various sensor data. The driver characteristic generation unit 120 generates face information and driving characteristics based on the sensor data. The vehicle system 10 transmits the generated face authentication and driving characteristics to the driver collation system 30. Unlike the vehicle system 10 of the first example embodiment, the vehicle system 10 in the modification transmits the driving characteristics to the driver collation system 30 without waiting for the collation result of the face information of the driver collation system 30.

Next, an operation of the vehicle system 10 according to the modification will be described. The driver collation system 30 receives the face information of the driver of the vehicle transmitted from the vehicle system 10. The identification processing unit 301 of driver collation system 30 acquires the face information of the driver of the vehicle (step S301), and performs the face authentication using the acquired face information of the driver (step S302). Specifically, the identification processing unit 301 collates the acquired face information of the driver with the previously registered face information 401 stored in the collation DB 40, and identifies the driver of the vehicle. The identification processing unit 301 sends the authentication result to the output processing unit 303.

Next, the driver collation system 30 receives the driving characteristics of the driver in the vehicle transmitted from the vehicle system 10. The extraction processing unit 302 of the driver collation system 30 acquires the driving characteristics of the driver (step S303), and collates the acquired driving characteristics of the driver with the past driving characteristics of the driver in the collation DB 40 (step S304). The extraction processing unit 302 extracts a driver candidate that is a candidate for the driver of the vehicle (step S305). The extraction processing unit 302 transmits the extraction result to the output processing unit 303.

The output processing unit 303 receives the face authentication result from the identification processing unit 301 and the extraction result of the extraction processing unit 302. The output processing unit 303 performs comparison with the reservation information 404 in the collation DB 40 using the face authentication result and the collation result of the driving characteristics (step S306), and outputs a comparison result between the driver of the vehicle and the subscriber of the vehicle (step S307).

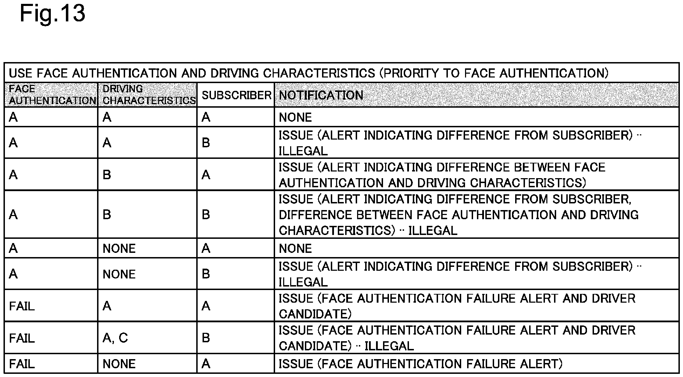

Fig. 13 is a diagram illustrating a notification example which is a comparison result between a driver and a driver candidate of the vehicle and a subscriber of the vehicle. In the notification example illustrated in Fig. 13, the items of the face authentication, the driving characteristics, and the subscriber are the same as those in the notification example illustrated in Fig. 10, and a detailed description thereof will be omitted.

In Fig. 13, as a result of the face authentication and the collation of the driving characteristics, when the driver and the driver candidate are "A" and the subscriber of the reservation information is "A", the output processing unit 303 does not give a notification. On the other hand, when the subscriber of the reservation information is "B", the output processing unit 303 notifies a fraud alert indicating that the driver of the vehicle is "different from the subscriber".

As a result of the face authentication and the collation of the driving characteristics, when the driver is "A", the driver candidate is "B", and the subscriber of the reservation information is "A", the output processing unit 303 notifies an alert indicating that "the face authentication and the driving characteristics are different". At this time, the result of the face authentication is prioritized in comparison with the reservation information, and the output processing unit 303 does not notify the fraud alert. On the other hand, when the subscriber of the reservation information is "B", the output processing unit 303 notifies an alert indicating "the face authentication and the driving characteristics are different" and a fraud alert indicating "different from the subscriber".

In Fig. 13, when the face authentication fails and when the driving characteristics is "None", the notification pattern output from the output processing unit 303 is similar to the example of Fig. 10.

As described above, in the modification of the operation of the driver collation system, the notification pattern from the output processing unit 303 can be increased by using the collation result of the driving characteristics regardless of the success or failure of the face authentication, and more detailed notification can be made.

### (Effects of first example embodiment)

According to the driver collation system 30 of the first example embodiment, it is possible to appropriately extract a candidate for the driver of the vehicle. This is because the extraction processing unit 302 acquires the driving characteristics of the driver who drives the vehicle from the vehicle system 10, and collates the acquired driving characteristics with the past driving characteristics to extract a driver candidate.

### [Second example embodiment]

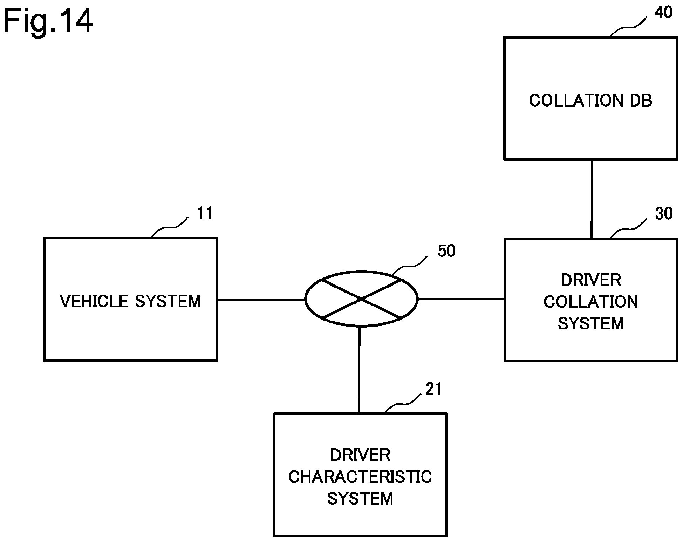

A management system according to a second example embodiment will be described with reference to the drawings. Fig. 14 is a diagram illustrating an outline of a management system according to the second example embodiment. In the description of the second example embodiment, the same components as those of the first example embodiment are denoted by the same reference numerals, and detailed description thereof is omitted.

The management system of the second example embodiment is different in that the vehicle system 10 and the driver characteristic DB 20 in the management system of the first example embodiment are a vehicle system 11 and a driver characteristic system 21.

In the management system of the second example embodiment, in the vehicle system 11, the vehicle sensor 110 installed in the vehicle acquires various sensor data and transmits the sensor data to the driver characteristic system 21. The driver characteristic system 21 generates face information and driving characteristics of the driver based on the sensor data transmitted from the vehicle system 11. Hereinafter, configurations of the vehicle system 11 and the driver characteristic system 21 according to the second example embodiment will be described.

### (Vehicle system 11)

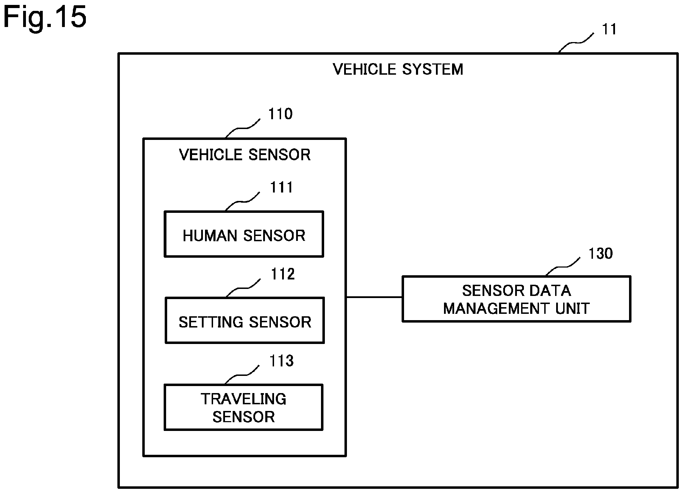

Fig. 15 is a block diagram illustrating an example of a configuration of the vehicle system 11 according to the second example embodiment. The vehicle system 11 of Fig. 15 includes a vehicle sensor 110, a sensor data management unit 130, and a communication unit (not illustrated). The configuration of the vehicle sensor 110 of the vehicle system 11 is similar to that of the vehicle sensor 110 of the vehicle system 10 according to the first example embodiment. Various sensor data collected by the vehicle sensor 110 is sent to the sensor data management unit 130.

The sensor data management unit 130 transmits the sensor data from the vehicle sensors 110 to the driver characteristic system 21 in association with the vehicle ID. For example, the sensor data management unit 130 may transmit the acquired sensor data to the driver characteristic system 21 for each of the human sensor 111, the setting sensor 112, or the traveling sensor 113.

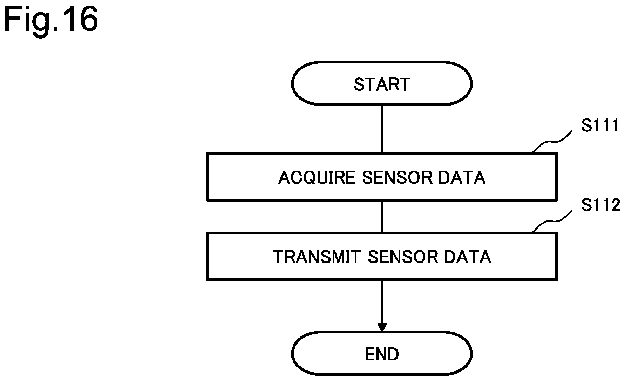

Fig. 16 is a flowchart illustrating an example of an operation of the vehicle system according to the second example embodiment. The vehicle sensor 110 of the vehicle acquires various sensor data (step S111). The vehicle sensor 110 is the human sensor 111, the setting sensor 112, or the traveling sensor 113. The vehicle sensor 110 transmits the acquired various sensor data to the sensor data management unit 130. The sensor data management unit 130 transmits the acquired sensor data in association with the vehicle ID to the driver characteristic system 21 (step S112).

### (Driver characteristic system 21)

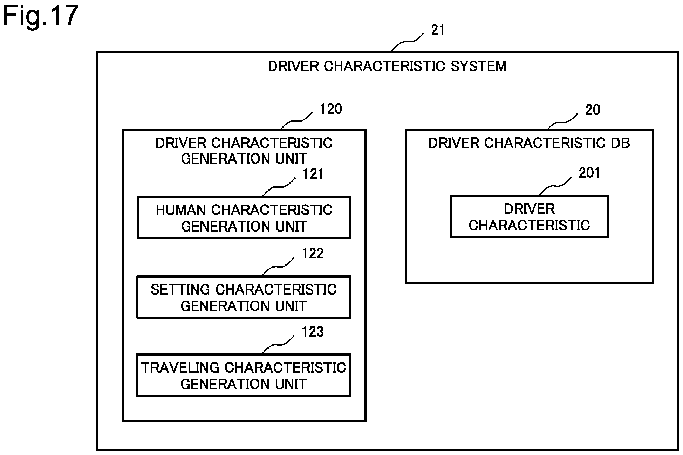

Fig. 17 is a block diagram illustrating an example of a configuration of the driver characteristic system 21 according to the second example embodiment. The driver characteristic system 21 is, for example, a computer that executes various functions by software. The driver characteristic system 21 may be achieved by cloud computing. The driver characteristic system 21 of Fig. 17 includes a driver characteristic generation unit 120 and a driver characteristic DB 20. The driver characteristic generation unit 120 of the driver characteristic system 21 has the same configuration as the driver characteristic generation unit 120 of the vehicle system 10 according to the first example embodiment, and thus a detailed description thereof will be omitted. The face information of the driver and the motion characteristic of the driver for each vehicle generated by the driver characteristic generation unit 120 are transmitted to and stored in the driver characteristic DB 20. The driver characteristic system 21 transmits the face characteristic and the driving characteristics generated by the driver characteristic generation unit 120 to the driver collation system 30.

Since the configuration of the driver characteristic DB 20 is similar to that of the first example embodiment, a detailed description thereof will be omitted. The driver characteristic DB 20 may be installed outside the driver characteristic system 21. For example, the driver characteristic DB 20 may be communicatively connected to the driver characteristic system 21 via the network 50 as in the first example embodiment.

### <Operation of driver characteristic system 21>

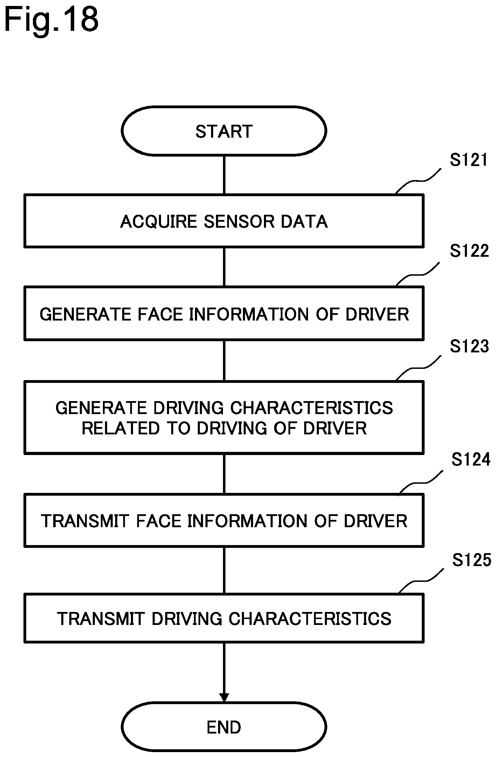

An operation of the driver characteristic system 21 according to the second example embodiment will be described with reference to the drawings. Fig. 18 is a flowchart illustrating an example of an operation of the driver characteristic system 21 according to the second example embodiment. Hereinafter, an example in which the driver characteristic system 21 generates face information and driving characteristics of a driver who drives a vehicle and transmits the generated face characteristic and driving characteristics to the driver collation system 30 will be described.

The driver characteristic system 21 receives sensor data from the vehicle system 11. The sensor data is, for example, captured image data obtained by photographing a driver of the vehicle, an installation position of a seat, acceleration of the vehicle, and the like. The driver characteristic generation unit 120 acquires sensor data (step S121). The driver characteristic generation unit 120 generates face information and driving characteristics based on the acquired sensor data. For example, the human characteristic generation unit 121 of the driver characteristic generation unit 120 generates the face information of the driver based on the sensor data of the human sensor 111 (step S122). Alternatively, the driver characteristic generation unit 120 generates driving characteristics regarding driving of the driver based on the sensor data of the vehicle sensor 110 (step S123). The driving characteristics are, for example, a human characteristic indicating a driving posture of the driver, a setting characteristic which is a mirror position of the vehicle set by the driver, and a traveling characteristic of a way of stepping on an accelerator pedal by the driver.

Next, the vehicle system 11 transmits the face information of the driver to the driver collation system 30 for face authentication using the face information of the driver (step S124). Further, the vehicle system 10 transmits the driving characteristics of the driver to the driver collation system 30 for collation of the driver using the driving characteristics (step S125). The face information and the driving characteristics transmitted to the driver collation system 30 are associated with the vehicle ID.

### (Effects of second example embodiment)

According to the vehicle system 11 of the second example embodiment, since the configuration of the driver characteristic generation unit 120 is not provided, the system configuration of the vehicle system 11 in the vehicle can be simplified, or the load of the system can be reduced.

According to the driver characteristic system 21 according to the second example embodiment, the driver characteristic generation unit 120 generates the face information and the driving characteristics for each vehicle, so that the generation processing can be made efficient. Specifically, the human characteristic generation unit 121 can generate a face image or face information that is a face characteristic by collectively performing image processing on captured image data from a plurality of vehicles. The efficiency of the driving characteristics can be improved by dividing the generation processing into the human characteristic of the driver, the setting characteristic of the vehicle setting of the driver, and the traveling characteristic of the driver and collectively processing the plurality of vehicles.

### [Third example embodiment]

A driver collation system according to a third example embodiment will be described with reference to the drawings. Similarly to the driver collation system 30 according to the first example embodiment, the driver collation system according to the third example embodiment is communicably connected to the vehicle system 10 or the driver characteristic DB 20 via the network 50. The driver collation system 31 may be communicably connected to the collation DB 40.

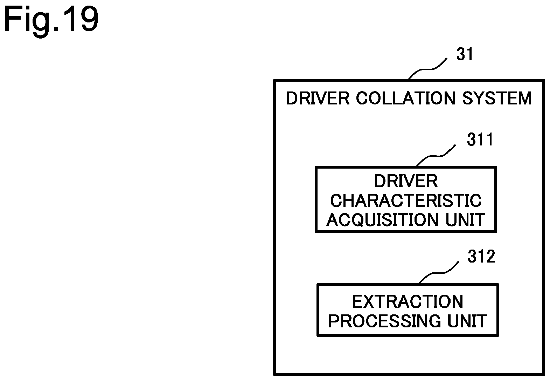

Fig. 19 is a block diagram illustrating an example of a configuration of a driver collation system 31 according to the third example embodiment. The driver collation system 31 corresponds to the extraction processing unit 302 of the driver collation system 30 according to the first example embodiment. The driver collation system 31 illustrated in Fig. 19 includes a driver characteristic acquisition unit 311, an extraction processing unit 312, and a communication unit (not illustrated). The driver collation system 31 is, for example, a computer that executes various functions by software. The driver collation system 31 may be achieved by cloud computing.

The driver collation system 31 receives driving characteristics related to driving of the driver in the vehicle from the vehicle system 10. The driver characteristic acquisition unit 311 acquires a driver's driving characteristics. The driving characteristics of the driver includes, for example, at least one of a human characteristic, a setting characteristic, and a traveling characteristic.

The extraction processing unit 312 collates the acquired driving characteristics of the driver with the past driving characteristics. The past driving characteristics is included in, for example, the driver characteristics 201 of the driver characteristic DB 20. The past driving characteristics of the driver characteristics 201 include at least one of a human characteristic, a setting characteristic, and a traveling characteristic. The extraction processing unit 312 extracts a driver candidate who is a driver same as or similar to the acquired driving characteristics from among the driving characteristics of the driver in the past.

The extracted information regarding the driver candidate is, for example, driver's face information associated with the driving characteristics. Alternatively, when information that can identify an individual is associated with the past driving characteristics of the driver characteristic DB 20, the information may be extracted as the information of the driver candidate. The information that can identify an individual is, for example, a driver's license number, an individual number, a membership number, or the like. When the extraction processing unit 302 fails to extract a driver candidate, the extraction result is "no driver candidate".

In addition to the vehicle system 10, the driver collation system 31 may receive the driving characteristics of the driver of the vehicle via the driver characteristic DB 20.

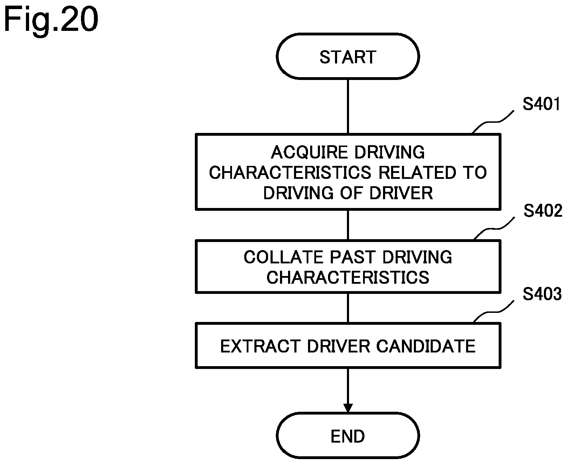

An operation of the driver collation system 31 according to the third example embodiment will be described with reference to the drawings. Fig. 20 is a flowchart illustrating an example of the operation of the driver collation system 31 according to the third example embodiment.

The driver collation system 31 receives the driving characteristics of the driver in the vehicle transmitted from the vehicle system 10, and the extraction processing unit 312 acquires the driving characteristics of the driver (step S401). The extraction processing unit 312 collates the acquired driving characteristics of the driver with the past driving characteristics of the driver stored in the driver characteristic DB 20 (step S402). The extraction processing unit 312 extracts a driver candidate that is a candidate for the driver of the vehicle from the past drivers (step S403).

### (Effects of third example embodiment)

According to the driver collation system 31 of the third example embodiment, it is possible to appropriately extract a candidate for the driver of the vehicle. This is because the driver characteristic acquisition unit 311 acquires the driving characteristics of the driver who drives the vehicle from the vehicle system 10, and the extraction processing unit 312 collates the acquired driving characteristics with the driving characteristics of the driver in the past and extracts a driver candidate from the driver in the past.

### (Hardware configuration)

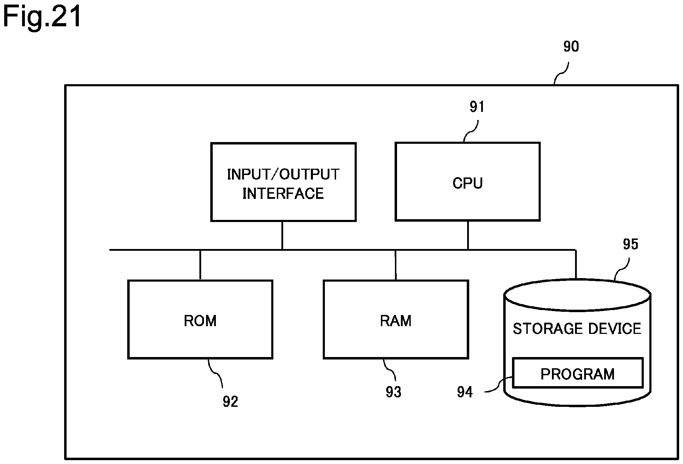

Fig. 21 is a diagram illustrating a hardware configuration of a computer. The driver collation systems 30 and 31 are achieved by executing a program (software program, computer program) in a CPU 91 of a computer 90 illustrated in Fig. 21. The same applies to the vehicle systems 10 and 11 and the driver characteristic system 21. The function of the driver collation system 30 is achieved by executing a program. The function of any one of the driver collation systems 30 and 31 may be configured by an external device (not illustrated) and provided from the external device to the driver collation system 30 via a network. The configurations of the driver collation systems 30 and 31 may be achieved by a central processing unit (CPU) 91 reading a program 94 from a read only memory (ROM) 92 or a storage device 95 and executing the read program 94 using the CPU 91 and a random access memory (RAM) 93. The present disclosure described using the above-described example embodiment as an example can be regarded as being configured by a computer readable recording medium in which a code representing a computer program is stored or a code representing the computer program. The computer-readable recording medium is, for example, a storage device 95, a removable magnetic disk medium (not illustrated), an optical disk medium, a memory card, or the like. The configuration of each example embodiment may be dedicated hardware by an integrated circuit. The driver collation systems 30 and 31 may be achieved by cloud computing.

The present disclosure is not limited to the above-described example embodiments, and various modifications can be made, and example embodiments obtained by appropriately combining configurations, operations, and processes disclosed in different example embodiments are also included in the technical scope of the present disclosure.

The present disclosure is not limited to the above-described example embodiments. That is, the present invention can apply various aspects that can be understood by those of ordinary skill in the art without departing from the spirit and scope of the present disclosure.

### (Supplementary Notes)

### [Supplementary Note 1]

A driver collation system including:
a driver characteristics acquisition means configured to acquire driving characteristics related to driving by a driver of a vehicle; and
an extraction processing means configured to extract a driver candidate from past drivers by collating the acquired driving characteristics with the driving characteristics of the past drivers.

### [Supplementary Note 2]

The driver collation system according to Supplementary Note 1, further including:
an identification processing means configured to identify the driver by face authentication using face information of the driver in the vehicle.

### [Supplementary Note 3]

The driver collation system according to Supplementary Note 2, further including:
an output processing means configured to compare the identified driver or the extracted driver candidate with a subscriber included in reservation information of the vehicle and notifies a comparison result.

### [Supplementary Note 4]

The driver collation system according to Supplementary Note 3, in which
the output processing means compares the extracted driver candidate with the subscriber when the face authentication fails.

### [Supplementary Note 5]

The driver collation system according to Supplementary Note 3, in which
the output processing means gives priority to the identified driver when comparing the identified driver and the extracted driver candidate with the subscriber.

### [Supplementary Note 6]

The driver collation system according to any one of Supplementary Notes 1 to 5, in which
the driving characteristics include a human characteristic indicating a characteristic of the driver in a driver's seat of the vehicle.

### [Supplementary Note 7]

The driver collation system according to Supplementary Note 6, in which
the human characteristic is a position of a face of the driver or a driving posture in the vehicle.

### [Supplementary Note 8]

The driver collation system according to Supplementary Note 6, in which
the human characteristic is a habit and a nature of a behavior of the driver in the vehicle.

### [Supplementary Note 9]

The driver collation system according to any one of Supplementary Notes 1 to 5, in which
the driving characteristics includes a setting characteristic indicating a characteristic of setting of the vehicle by the driver.

### [Supplementary Note 10]

The driver collation system according to Supplementary Note 9, in which
the setting characteristic is a position of a rearview mirror, a door mirror, or a seat set by the driver.

### [Supplementary Note 11]

The driver collation system according to any one of Supplementary Notes 1 to 5, in which
the driving characteristics include a traveling characteristic indicating a characteristic of vehicle traveling by the driver.

### [Supplementary Note 12]

The driver collation system according to Supplementary Note 11, in which
the traveling characteristic is an operation characteristic indicating a characteristic of a speed of at least one of an accelerator, a brake, and a steering by the driver.

### [Supplementary Note 13]

The driver collation system according to Supplementary Note 2, in which
the identification processing means identifies the driver based on identification information acquired from an authentication medium in the vehicle.

### [Supplementary Note 14]

A driver collation method including:
acquiring driving characteristics related to driving of a driver in a vehicle; and
extracting a driver candidate from past drivers by collating the acquired driving characteristics with the driving characteristics of the past drivers.

### [Supplementary Note 15]

A recording medium storing a program for causing a computer to execute:
acquiring driving characteristics related to driving of a driver in a vehicle; and
extracting a driver candidate from past drivers by collating the acquired driving characteristics with the driving characteristics of the past drivers.

### [Supplementary Note 16]

A vehicle system including:
a vehicle sensor configured to generate sensor data related to driving of a driver in a vehicle; and
a driver characteristic generation means configured to generate driving characteristics of the driver based on the generated sensor data.

### [Supplementary Note 17]

A vehicle system including:
a vehicle sensor configured to generate sensor data related to driving of a driver in a vehicle; and
a sensor data management means configured to transmit the generated sensor data to a driver characteristic system that generates driving characteristics related to driving of the driver.

### [Supplementary Note 18]

A driver characteristic system including:
a driver characteristic generation means configured to generate driving characteristics related to driving of a driver in a vehicle based on sensor data related to the driving of the driver; and
a driver characteristic database that stores the generated driving characteristics.

### Reference signs List

- 10, 11: vehicle system
- 20: driver characteristic DB
- 21: driver characteristic system
- 30, 31: driver collation system
- 40: collation DB
- 110: vehicle sensor
- 111: human sensor
- 112: setting sensor
- 113: traveling sensor
- 120: driver characteristic generation unit
- 121: human characteristic generation unit
- 122: setting characteristic generation unit
- 123: traveling characteristic generation unit
- 130: sensor data management unit
- 301: identification processing unit
- 302: extraction processing unit
- 303: output processing unit
- 401: face information
- 402: reservation information
- 404: reservation information

## Claims

1. A driver collation system comprising:
a driver characteristics acquisition means configured to acquire driving characteristics related to driving by a driver of a vehicle; and
an extraction processing means configured to extract a driver candidate from past drivers by collating the acquired driving characteristics with the driving characteristics of the past drivers.

2. The driver collation system according to claim 1, further comprising:
an identification processing means configured to identify the driver by face authentication using face information of the driver in the vehicle.

3. The driver collation system according to claim 2, further comprising:
an output processing means configured to compare the identified driver or the extracted driver candidate with a subscriber included in reservation information of the vehicle and notifies a comparison result.

4. The driver collation system according to claim 3, wherein
the output processing means compares the extracted driver candidate with the subscriber when the driver is not identified in the face authentication.

5. The driver collation system according to claim 3, wherein
the output processing means gives priority to the identified driver when comparing the identified driver and the extracted driver candidate with the subscriber.

6. The driver collation system according to any one of claims 1 to 5, wherein
the driving characteristics include a human characteristic indicating a characteristic of the driver in a driver's seat of the vehicle.

7. The driver collation system according to claim 6, wherein
the human characteristic is a position of a face of the driver or a driving posture in the vehicle.

8. The driver collation system according to claim 6, wherein
the human characteristic is a habit and a nature of a behavior of the driver in the vehicle.

9. The driver collation system according to any one of claims 1 to 5, wherein
the driving characteristics includes a setting characteristic indicating a characteristic of setting of the vehicle by the driver.

10. The driver collation system according to claim 9, wherein
the setting characteristic is a position of a rearview mirror, a door mirror, or a seat set by the driver.

11. The driver collation system according to any one of claims 1 to 5, wherein
the driving characteristics include a traveling characteristic indicating a characteristic of vehicle traveling by the driver.

12. The driver collation system according to claim 11, wherein
the traveling characteristic is an operation characteristic indicating a characteristic of a speed of at least one of an accelerator, a brake, and a steering by the driver.

13. The driver collation system according to claim 2, wherein
the identification processing means identifies the driver based on identification information acquired from an authentication medium in the vehicle.

14. A driver collation method comprising:
acquiring driving characteristics related to driving of a driver in a vehicle; and
extracting a driver candidate from past drivers by collating the acquired driving characteristics with the driving characteristics of the past drivers.

15. A recording medium storing a program for causing a computer to execute:
acquiring driving characteristics related to driving of a driver in a vehicle; and
extracting a driver candidate from past drivers by collating the acquired driving characteristics with the driving characteristics of the past drivers.

16. A vehicle system comprising:
a vehicle sensor configured to generate sensor data related to driving of a driver in a vehicle; and
a driver characteristic generation means configured to generate driving characteristics of the driver based on the generated sensor data.

17. A vehicle system comprising:
a vehicle sensor configured to generate sensor data related to driving of a driver in a vehicle; and
a sensor data management means configured to transmit the generated sensor data to a driver characteristic system that generates driving characteristics related to driving of the driver.

18. A driver characteristic system comprising:
a driver characteristic generation means configured to generate driving characteristics related to driving of a driver in a vehicle based on sensor data related to the driving of the driver; and
a driver characteristic database that stores the generated driving characteristics.
